# EUROPÄISCHE PATENTSCHRIFT

(11) **EP 0 450 175 B1**
(45) Veröffentlichungstag und Bekanntmachung des Hinweises auf die Patenterteilung: **06.07.1994**
(21) Anmeldenummer: 90124655.3
(22) Anmeldetag: 19.12.1990
(51) Int. Cl.: G01F 23/04

(54) **Optoelektrische Füllstandsanzeigevorrichtung**
Optoelectrical liquid level indication device
Dispositif d'indication opto-électrique du niveau d'un liquide

(30) Priorität: 05.04.1990 DE 4010949
(43) Veröffentlichungstag der Anmeldung: 09.10.1991
(73) Patentinhaber: Fibronix Sensoren GmbH, D-24143 Kiel (DE)
(72) Erfinder: Eisele, Ronald, Dipl.-Phys., W-2307 Dänisch-Nienhof (DE)
(74) Vertreter: Patentanwälte Westphal, Buchner, Mussgnug Neunert, Göhring

(56) Entgegenhaltungen:
- EP-A-02 378 50
- DE-A- 2 920 199
- DE-A- 3 121 287
- DE-A-32 471 92

## Beschreibung

Die Erfindung bezieht sich auf eine optoelektrische Füllstandsanzeigevorrichtung der im Oberbegriff des Hauptanspruchs angegebenen Art, wie sie beispielsweise aus der EP 0 237 850 A1 bekannt ist.

Solche Füllstandsanzeigevorrichtungen, auch Füllstandsgrenzschalter genannt, werden beispielsweise zur Füllstandsmessung oder -kontrolle des Flüssigkeitsspiegels in explosionsgefährdeten Tanks, z.B. Flüssiggas-Tanks oder Behältern mit Lösungsmitteln oder dgl., eingesetzt. In diesem Fall müssen sich elektrische oder elektronische Steuereinrichtungen außerhalb des explosionsgefährdeten Bereichs befinden. Das den Flüssigkeitsspiegel kontrollierende Signal wird darum in dem explosionsgefährdeten Bereich ausschließlich mit optischen Mitteln erzeugt, übertragen und moduliert, während die elektrische Auswertung an einem vom Flüssigkeitsbehälter entfernten Ort durchgeführt wird.

Diese Füllstandsanzeige- oder -meßvorrichtungen bestehen im wesentlichen aus einer Lichtquelle, deren Licht über Lichtwellenleiter einem oberhalb des Flüssigkeitsspiegels angeordneten Sensor zugeführt wird, dessen Grenzfläche, solange diese außerhalb des flüssigen Mediums gelegen ist, das eingekoppelte Licht aufgrund von Totalreflexion zum überwiegenden Anteil reflektiert. Das reflektierte Licht wird wiederum über einen Lichtwellenleiter einem Lichtdetektor zugeleitet. Kommt dagegen der Sensorkörper, der aus transparentem Glas oder Kunststoff besteht, mit dem Flüssigkeitsspiegel in Berührung, so wird ein Teil des auf die Grenzfläche auftreffenden Lichtes wegen Unterschreitung des Totalreflexionswinkels in die Flüssigkeit ausgekoppelt und nur noch ein geringerer Teil dem Lichtdetektor zugeführt.

Hierfür geeignete Anordnungen sind z.B. aus folgenden Offenlegungsschriften bekannt: EP 0 237 850 A1, DE 32 35 591 A1, DE 32 47 192 A1, DE 29 20 199 A1.

Aus den deutschen Offenlegungsschriften DE 32 43 839 A1 und 27 17 089 A1 sind ferner ähnlich aufgebaute Anzeigevorrichtungen zur Erfassung des Pegelstandes von Flüssigkeiten in Flüssigkeitsbehältern, z.B. Tanks von Kraftfahrzeugen bei welchen als Sensorkörper Glasstäbe vorgesehen sind, bekannt, in welchen das Licht, wie auch bei Multimodelichtleitfasern durch innere Totalreflexion einem die reflektierende Grenzfläche aufweisenden Prisma zugeführt wird.

Gegenüber den zuvor erwähnten, nur mit Lichtleitfasern arbeitenden Anordnungen haben die zuletzt genannten den Nachteil, daß sich die an elektrischer Spannung liegenden Bauelemente, wie Leucht- und Fotodioden bzw. -transistoren, innerhalb oder in unmittelbarer Nachbarschaft des zu überwachenden Flüssigkeitsbehälters befinden. Solche Anordnungen sind darum für Kontrolle explosionsgefährdeter Flüssigkeitsbehälter ungeeignet.

Ein entscheidender Nachteil beider Systeme besteht darin, daß der Signalhub, also die Signaldifferenz, zwischen dem Meßwert bei unbenetztem Sensor und demjenigen bei benetztem, noch vergleichsweise gering ist. Das rührt daher, daß ein nicht unwesentlicher Teil der im Lichtwellenleiter geführten Lichtmoden, die ja mehrfach an der Innenwand des Lichtleiters reflektiert werden, schon bei Luftkontakt wegen Unterschreiten des Totalreflexionswinkels aus der Grenzfläche austritt. Auch wenn der Sensorkörper von der Flüssigkeit benetzt ist, ist mit störenden und den Signalhub verringernden Reflexionen zu rechnen, da nur in ganz seltenen Fällen der im übrigen auch temperaturabhängige Brechungsindex zwischen dem transparenten Sensorkörpermaterial und dem zu kontrollierenden Medium übereinstimmt.

Der vorliegenden Erfindung liegt die Aufgabe zugrunde, eine insbesondere zur Überwachung explosionsgefährdeter Flüssigkeiten geeignete optoelektrische Füllstandsanzeigevorrichtung der im Oberbegriff angegebenen Art zu schaffen, welche bei Meidung der genannten Nachteile einen möglichst großen Signalhub gewährleistet.

Gelöst wird diese Aufgabe mit den gemäß Anspruch 1 gekennzeichneten Merkmalen.

Die Grundidee der Erfindung besteht darin, das an den Sensorkörper über einen Lichtwellenleiter herangeführte Licht mittels einer Plankonvexlinse parallel zu richten, es über ein kreiszylindrisches Element ohne wesentliche Reflexion an der Zylinderwand einer kegelförmigen Grenzfläche zuzuführen, an welcher es im Falle der Totalreflexion umgelenkt und wiederum parallel zur Zylinderwandung zur Plankonvexlinse zurückgeführt wird. Diese fokussiert das parallel gerichtete Licht auf den rückleitenden Lichtwellenleiter, der das eingekoppelte Licht, von Reflexions- und Streuverlust abgesehen, weitgehend ungedämpft dem Lichtdetektor zuführt. Wird dagegen die kegelförmige Grenzfläche mit einer Flüssigkeit benetzt, z.B. vom Flüssigkeitsspiegel der zu kontrollierenden Flüssigkeit erreicht, so tritt der überwiegende Anteil des Lichtes durch die Grenzfläche in das flüssige Medium, so daß nur ein ganz geringer Teil den Lichtdetektor erreicht. Auf diese Art und Weise ergibt sich ein sehr großer Signalhub auch in dem Falle, daß das benetzende Medium einen vom Brechungsindex des Sensorkörpers stark abweichenden Brechungsindex besitzt.

Weitere konstruktive Merkmale sind Gegenstand der Unteransprüche 2 bis 5.

So kann der Sensorkörper mit Plankonvexlinse und Kreiskegel einstückig aus transparentem Glas oder Kunststoff bestehen. Die Lichtzuführung und -abführung kann entweder über gesonderte Lichtwellenleiter (vgl. Anspruch 3) oder über sich Y-förmig verzweigende Lichtwellenleiter (Anspruch 4) erfolgen.

Bei Verwendung des erfindungsgemäßen Vorschlages zur Füllstandsanzeige in explosionsgefährdeter Umgebung können die Vorschriften für Flammendurchschlagssicherheit in sehr einfacher Weise durch entsprechende Längenbemessung des zylindrischen Elementes des Sensorkörpers erfüllt werden, wie mit Anspruch 5 angegeben ist. Komplizierte und damit kostspielige Lösungen (vgl. hierzu DE-GM 79 08 489) für die Faserbündeldurchführung lassen sich hierbei dadurch vermeiden, daß die Lichtleitfasern auf der drucklosen Behälterseite mit dem Sensorkörper verbunden sind.

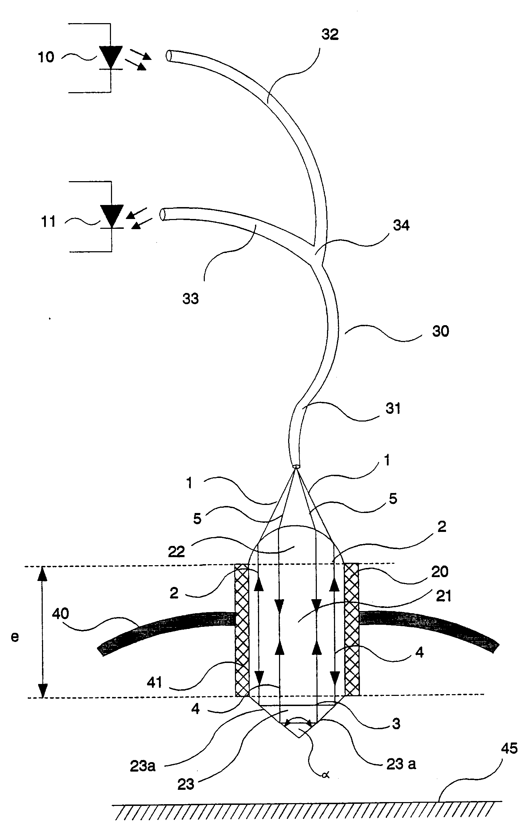

Der Gegenstand der Erfindung ist nachstehend anhand eines Ausführungsbeispieles erläutert, das in schematischer Weise in der Zeichnung dargestellt ist.

Bei diesem Ausführungsbeispiel wird mit der erfindungsgemäßen Vorrichtung der Pegel eines Flüssigkeitsspiegels 45 überwacht.

Diesem Zweck dient der Sensorkörper 20, welcher mit seinem kreiszylindrischen Mittelteil 21 die Wand 40 eines im einzelnen nicht dargestellten Behälters durchsetzt und gegenüber dieser mit einer schematischen angedeuteten Dichtung 41 flüssig- und gasdicht abgedichtet ist. Das in dem Sensorkörper 20 ein- und auszukoppelnde Licht 1, 5 wird über Lichtwellenleiter 31 bis 33 zu- bzw. abgeleitet.

Als Lichtquelle ist beispielsweise eine Leuchtdiode 10 oder ein anderes Licht emittierendes Halbleiterelement und als Lichtdetektor ist eine Fotodiode 11 oder dergleichen Lichtempfänger vorgesehen. Das von der Leuchtdiode 10 erzeugte Licht wird über den Senderlichtwellenleiter 32 und eine Verzweigung 34 dem gemeinsamen Lichtwellenleiter 31 zugeführt, aus dessen Ende das noch ungerichtete Licht 1 austritt. Dieses Licht 1 wird mittels einer Plankonvexlinse 22 parallelgerichtet, wie mit den Strahlen 2 angedeutet ist, und in dieser Form durch das kreiszylindrische Element 21 des Sensorkörpers 20 ohne wesentliche Reflexionen an den Zylinderwänden weitergeleitet. Die dem Flüssigkeitsspiegel 54 zugewandte Seite des Sensorkörpers 20 ist in Form eines Kreiskegels 23 ausgebildet, dessen Mantelfläche 23a die Grenzfläche bildet. Der Kegelwinkel α beträgt 90°, so daß in Umgebung von Luft oder einer vergleichbaren gasförmigen Atmosphäre das parallelgerichtete Licht 2 an der Grenzfläche 23a in Richtung der Lichtstrahlen 3 und 4 totalreflektiert und wiederum parallelgerichtet zur Plankonvexlinse 22 rückgeführt wird. Diese bündelt das austretende Licht in Richtung der Strahlen 5, so daß das reflektierte Licht über den gemeinsamen Leiter 31 und nach Passieren der Verzweigung 34 dem Empfängerlichtleiter 33 zugeführt und von diesem zur Licht empfangenden Fotodiode 11 mit nur geringem Verlust geleitet wird. Selbstverständlich ist der Strahlengang mit den Pfeilen 1 bis 5 stark schematisiert, wobei die in den Strahlengang eingezeichneten Pfeile je nach Lichtein- und -austritt auch umgekehrt gerichtet sein können.

Wird die Grenzfläche 23a dagegen von der Flüssigkeit benetzt, taucht sie z.B. ganz oder teilweise in den angestiegehen Flüssigkeitsspiegel 45 ein, so tritt das parallelgerichtete Licht 2 fast vollständig aus, so daß kein oder nur ein ganz unwesentlicher Anteil des Lichtes in Richtung der Pfeile 4 rückgeleitet wird. Zu der als Lichtdetektor wirkenden Fotodiode 11 gelangt praktisch kein Licht, der Lichtdetektor erzeugt kein Signal.

### FIGURENLEGENDE

- 1: eingekoppeltes Licht
- 2: parallel gerichtetes Licht
- 3: total reflektiertes Licht
- 4: total reflektiertes und
parallel rückgeführtes Licht
- 5: ausgekoppeltes Licht
- 10: Leuchtdiode
- 11: Fotodiode
- 20: Sensorkörper
- 21: Kreiszylinder, kreiszylindrisches Element
- 22: Plankonvexlinse
- 23: Kreiskegel
- 23a: Grenzfläche, Kegelmantel
- 30: Lichtwellenleiter
- 31: gemeinsamer Leiter
- 32: Senderleiter
- 33: Empfängerleiter
- 34: Verzweigung
- 40: Wandung
- 41: Dichtung
- 45: Flüssigkeitsspiegel
- α: Kegelwinkel
- l: Länge des Kreiszylinders 21

## Patentansprüche

1. Optoelektrische Füllstandsanzeigevorrichtung, bestehend aus einer Lichtquelle (10), einem Lichtdetektor (11) sowie einem transparenten Sensorkörper (20) mit einer das Licht je nach umgebendem Medium ganz oder teilweise reflektierenden Grenzfläche (23a), wobei der Sensorkörper (20) mit der Lichtquelle (10) bzw. dem Lichtdetektor (11) über Lichtwellenleiter (30 - 33) verbunden ist, wobei der Sensorkörper (20) aus einem Kreiszylinder (21) und einem Kreiskegel (23) mit einem Kegelwinkel (α) von 90° besteht und dessen Grenzfläche von der Mantelfläche (23a) des Kreiskegels (23) gebildet ist, dadurch gekennzeichnet, daß der Sensorkörper (20) mit den Lichtwellenleitern (31) über eine das eingekoppelte Licht (1) parallel richtende und das ausgekoppelte, reflektierte Licht (4) fokussierende Plankonvexlinse (22) verbunden ist.

2. Vorrichtung nach Anspruch 1, dadurch gekennzeichnet, daß der Sensorkörper (20) mit Plankonvexlinse (22) und Kreiskegel (23) einstückig ist und aus transparentem Glas oder Kunststoff besteht.

3. Vorrichtung nach Anspruch 1 oder 2, dadurch gekennzeichnet, daß die Plankonvexlinse (22) mit der Lichtquelle (10) und dem Lichtdetektor (11) jeweils über mindestens einen Lichtwellenleiter verbunden ist.

4. Vorrichtung nach Anspruch 1 oder 2, dadurch gekennzeichnet, daß die Plankonvexlinse (22) mit der Lichtquelle (10) und dem Lichtdetektor (11) über sich Y-förmig verzweigende Lichtwellenleiter (31 - 33) verbunden ist.

5. Vorrichtung nach einem der Ansprüche 1 bis 4 zur Füllstandsanzeige in explosionsgefährdeter Umgebung, dadurch gekennzeichnet, daß der Kreiszylinder (21) des Sensorkörpers (20) die Wandung (40) eines eine feuergefährdete Flüssigkeit enthaltenen Behälters durchdringt, gegenüber dieser abgedichtet ist und eine für Flammendurchschlag-Sicherheit vorgeschriebene Mindestlänge (l) aufweist.

## Claims

1. An optoelectrical level indicating device, consisting of a light source (10), a light detector (11) and also a transparent sensor body (20) having a boundary surface (23a) which completely or partially reflects the light depending on the surrounding medium, whereby the sensor body (20) is connected to the light source (10) and the light detector (11) via optical wave guides (30 - 33), whereby the sensor body (20) consists of a circular cylinder (21) and a circular cone (23) having a cone angle (α) of 90° and the boundary surface of which is formed by the shell surface (23a) of the circular cone (23),
**characterised in that** the sensor body (20) is connected to the optical wave guides (31) via a plano-convex lens (22) which directs the bunched light (1) parallel and focuses the decoupled, reflected light (4).

2. A device according to Claim 1,
**characterised in that** the sensor body (20) is in one piece with the plano-convex lens (22) and the circular cone (23) and is made from transparent glass or plastic.

3. A device according to Claim 1 or 2,
**characterised in that** the plano-convex lens (22) is connected to the light source (10) and the light detector (11) via at least one optical wave guide each.

4. A device according to Claim 1 or 2,
**characterised in that** the plano-convex lens (22) is connected to the light source (10) and the light detector (11) via optical wave guides (31 - 33) which branch in a Y-shape.

5. A device according to one of Claims 1 to 4 for level indication in a potentially explosive atmosphere,
**characterised in that** the circular cylinder (21) of the sensor body (20) penetrates the wall (40) of a container containing a potentially combustible fluid, is sealed in relation thereto and comprises a minimum length (1) prescribed for protection against flame breakthrough.

## Revendications

1. Dispositif d'indication opto-électrique du niveau d'un liquide, comprenant une source lumineuse (10), un photo-détecteur (11) ainsi qu'un corps de capteur (20), transparent, avec une surface limite (23a) réfléchissant totalement ou partiellement la lumière suivant le milieu ambiant, le corps de capteur (20) étant relié à la source lumineuse (10) ou au photo-détecteur (11) par des guides de lumière (30-33), le corps de capteur (20) étant formé d'un cylindre circulaire (21) et d'un cône circulaire (23) avec un angle au sommet (α) égal à 90° et dont la surface limite est formée par la surface enveloppe (23a) du cône circulaire (23), dispositif caractérisé en ce que le corps de capteur (20) est relié au guide de lumière (31) par une lentille plane-convexe (22) alignant parallèlement la lumière injectée (1) et focalisant la lumière (4), réfléchie, découplée.

2. Dispositif selon la revendication 1, caractérisé en ce que le corps de capteur (20) est en une seule pièce avec la lentille convexe-plane (22) et le cône circulaire (23) en verre transparent ou en matière plastique.

3. Dispositif selon la revendication 1 ou 2, caractérisé en ce que la lentille plane-convexe (22) est reliée à la source lumineuse (10) et au photo-détecteur (11) chaque fois par au moins un guide de lumière.

4. Dispositif selon la revendication 1 ou 2, caractérisé en ce que la lentille plane-convexe (22) est reliée à une source lumineuse (10) et au photo-détecteur (11) par des guides de lumière (31-33) qui se ramifient en forme de Y.

5. Dispositif selon l'une des revendications 1 à 4, pour indiquer le niveau d'un liquide dans un environnement en danger d'explosion, caractérisé en ce que le cylindre circulaire (21) du corps de capteur (20) traverse la paroi (40) d'un réservoir contenant un liquide inflammable, en étant rendu étanche par rapport au réservoir et ayant une longueur minimale (1) prescrite pour la sécurité de passage de flammes.
